# FASCICULE DE BREVET EUROPEEN

(11) **EP 1 502 878 B1**
(45) Date de publication et mention de la délivrance du brevet: **11.03.2009**
(21) Numéro de dépôt: 04291923.3
(22) Date de dépôt: 28.07.2004
(51) Int. Cl.: B65D 83/76

(54) **Dispositif de distribution**
Abgabevorrichtung
Dispensing device

(30) Priorité: 01.08.2003 FR 0309539
(43) Date de publication de la demande: 02.02.2005
(73) Titulaire: Plastic System Packaging, 36210 Chabris (FR)
(72) Inventeur: Poussard, Jean-Claude, 41200 Romorantin (FR)
(74) Mandataire: Debay, Yves

(56) Documents cités:
- EP-A- 0 827 480
- EP-A- 1 314 650
- GB-A- 2 342 700
- US-A- 5 910 162
- PATENT ABSTRACTS OF JAPAN vol. 2000, no. 26, 1 juillet 2002 (2002-07-01) -& JP 2001 240156 A (HIROKUNI:KK), 4 septembre 2001 (2001-09-04)

## Description

La présente invention concerne un dispositif de distribution selon le préambule de la revendication 1, constitué d'un récipient et d'un recouvrement. Le recouvrement est placé au-dessus du contenu du récipient, par exemple de la crème glacée, et une pression est exercée sur le recouvrement pour distribuer le contenu du récipient par une ouverture réalisée dans le fond du récipient. Le dispositif peut ainsi, par exemple, permettre de réaliser des glaces dites à l'italienne.

Il est connu par le brevet EP 827 480 un récipient de forme tronconique fermé à son extrémité inférieure par un fond et supporté par des pieds. Dans le fond du récipient est formée une zone de dépression cylindrique dont le fond est partagé en huit quartiers. Lorsqu'une pression est exercée sur le recouvrement, les quartiers du fond de la zone de dépression cylindrique s'écartent sous l'effet de la pression et laissent passer le contenu du récipient. Le recouvrement est constitué d'un fond surmonté d'un rebord tronconique à l'extrémité supérieure duquel est articulée une lèvre périphérique orientée vers le fond du récipient, de façon à racler les bords du récipient. Un inconvénient de ce dispositif de distribution est qu'il y a un risque de casse de la lèvre lorsque celle-ci pousse le contenu, en particulier lorsque ce contenu est dur s'il s'agit de crème glacée. Un autre inconvénient de ce dispositif est qu'il ne permet pas de vider l'ensemble du contenu du récipient, en particulier, le contenu de la zone de dépression ne peut pas être vidé à l'aide du recouvrement. Un troisième inconvénient est que l'articulation de la lèvre complique la fabrication du recouvrement.

Il est également connu un dispositif de distribution commercialisé par la société Miko. Le récipient, de forme légèrement tronconique, est fermé par un fond muni d'une ouverture en forme d'étoile à sept branches. Le fond est, sur son pourtour, incliné à environ 45° par rapport à l'horizontale. Le recouvrement permettant de distribuer le contenu du récipient a une forme complémentaire à la partie inférieure du récipient. Il comprend un fond surmonté d'un rebord tronconique en matériau flexible. Ce recouvrement ne comporte pas de lèvre pour racler le récipient, ce qui peut entraîner un vidage seulement partiel. De même, les faibles inclinaisons du fond du recouvrement et du fond du récipient peuvent entraîner que le récipient ne se vide pas entièrement.

Un dispositif de distribution selon le préambule de la revendication 1 est connu du document EP-A-1 314 650.

La présente invention a pour but de pallier certains inconvénients de l'art antérieur en proposant un dispositif de distribution d'un contenu, qui permette de vider complètement le récipient, qui soit résistant et qui soit simple à fabriquer.

Ce but est atteint par un dispositif de distribution, constitué d'un récipient et d'un recouvrement, le récipient comprenant un corps, de forme légèrement tronconique, fermé par un fond, le diamètre de la section dudit corps diminuant entre l'extrémité du récipient éloignée du fond et l'extrémité du récipient proche du fond, dites respectivement extrémité supérieure et extrémité inférieure du récipient, une zone de dépression, munie d'une ouverture au moins partielle permettant l'expulsion du contenu du récipient, étant réalisée à l'intérieur du fond du récipient, l'extrémité inférieure du recouvrement étant de forme et de dimensions complémentaires à l'intérieur de la zone de dépression du récipient, caractérisé en ce que le recouvrement comporte au moins deux lèvres flexibles formées l'une au-dessus de l'autre et orientées vers l'extrémité supérieure du recouvrement, les lèvres flexibles se déformant au fur et à mesure de la descente du recouvrement vers le fond du récipient, de façon à ce qu'au moins l'extrémité libre des lèvres flexibles reste en contact permanent avec la paroi intérieure du corps du récipient, pour permettre un vidage de la zone de dépression, assurant un vidage complet du contenu du récipient.

Selon une autre particularité, la zone de dépression formée dans le fond du récipient est constituée d'une paroi tronconique fermée par un fond muni de l'ouverture.

Selon une autre particularité, le recouvrement, comprenant un corps tronconique fermé par un fond, comporte une lèvre rigide solidaire de l'extrémité éloignée du fond, dite extrémité supérieure, du corps du recouvrement, tout autour de ce dernier, et orientée vers l'extrémité proche du fond, dite extrémité inférieure, du recouvrement, et en ce qu'une paroi est formée sur la lèvre rigide, à proximité du corps du recouvrement, les lèvres flexibles étant formées, respectivement, à l'extrémité de la lèvre rigide éloignée du corps du recouvrement, et sur la paroi.

Selon une autre particularité, l'épaisseur du fond de la zone de dépression est plus importante sur son pourtour, ce qui permet de limiter les déformations dudit fond sous l'effet de la pression exercée pour distribuer le contenu du récipient.

Selon une autre particularité, la paroi tronconique constituant la zone de dépression est renforcée par la présence d'une pluralité d'ailettes contenues dans des plans passant par l'axe de symétrie du récipient, chaque ailette formant équerre entre la paroi de la zone de dépression et une partie plane annulaire du fond du récipient.

Selon une autre particularité, le récipient comporte, à son extrémité supérieure, une collerette sur son pourtour, ainsi qu'une pluralité de nervures de renforcement, sensiblement verticales, formées sur la paroi extérieure du corps du récipient, qui permettent de renforcer le haut du récipient.

Selon une autre particularité, deux nervures circulaires parallèles sont formées à proximité de l'extrémité supérieure du récipient, sur la paroi intérieure du corps du récipient, dans des plans perpendiculaires à l'axe de ce dernier, pour servir de repère au positionnement des lèvres flexibles et maintenir le recouvrement au-dessus du contenu du récipient.

Selon une autre particularité, la lèvre rigide est positionnée à une distance du fond du recouvrement correspondant à la hauteur de la zone de dépression, a des dimensions proches de celles d'une partie annulaire plane du fond du récipient, et se déforme légèrement pour évacuer le contenu de ladite partie annulaire du fond du récipient vers la paroi tronconique de la zone de dépression.

D'autres particularités et avantages de la présente invention apparaîtront plus clairement à la lecture de la description ci-après, faite en référence aux dessins annexés, dans lesquels :
- la figure 1 représente une vue en perspective par en dessous du récipient selon l'invention,
- la figure 2 représente une vue en coupe longitudinale du récipient selon l'invention,
- la figure 3 représente une vue de dessous du récipient selon l'invention,
- la figure 4 représente une vue en coupe longitudinale du recouvrement selon l'invention.

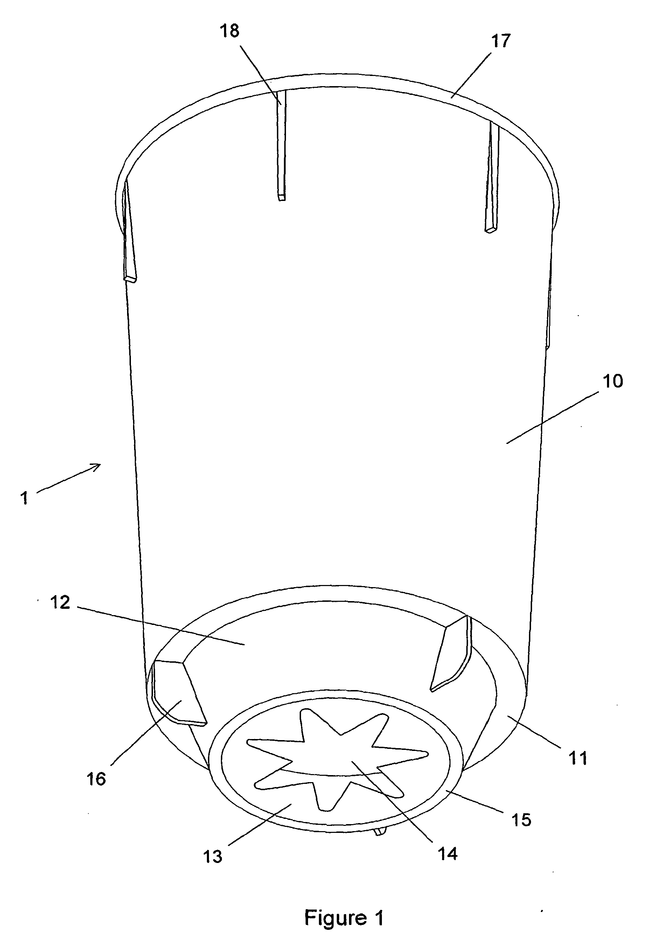

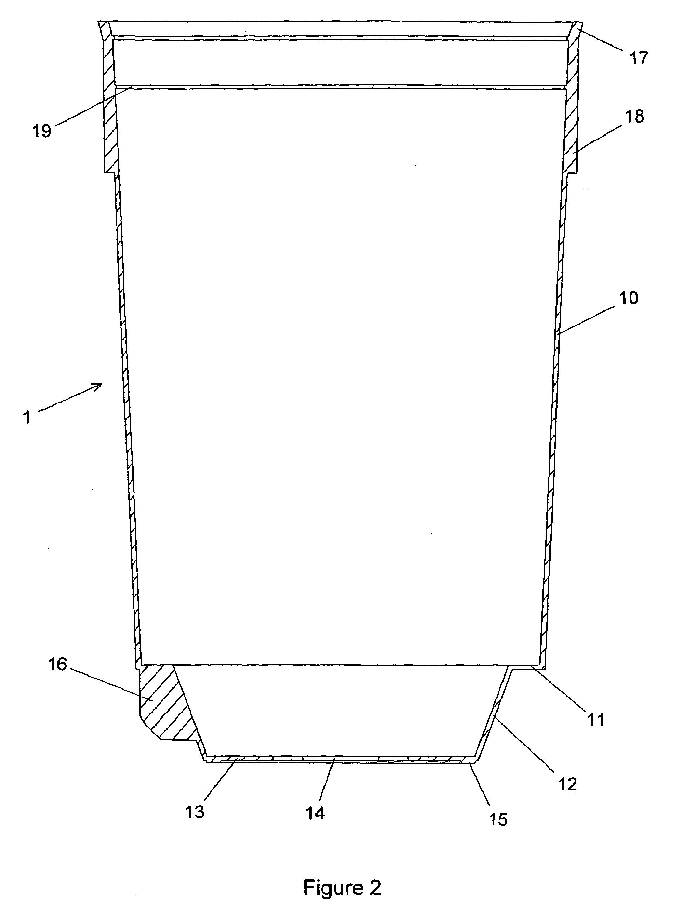

Le dispositif de distribution selon l'invention est constitué d'un récipient (1) et d'un recouvrement (2). Le récipient (1), représenté en particulier sur les figures 1 à 3, comprend un corps (10), de forme légèrement tronconique, fermé par un fond (11). Le diamètre de la section dudit corps (10) diminue entre l'extrémité du récipient éloignée du fond et l'extrémité du récipient proche du fond, dites respectivement extrémité supérieure et extrémité inférieure du récipient. Une zone de dépression est formée à l'intérieur du fond (11) du récipient (1), en son centre. Cette zone de dépression est constituée d'une paroi tronconique (12) fermée par un fond (13). Le diamètre de la section de ladite paroi (12) diminue entre l'extrémité de la zone de dépression éloignée du fond et l'extrémité de la zone de dépression proche du fond, dites respectivement extrémité supérieure et extrémité inférieure de la zone de dépression. Le fond (13) de la zone de dépression est muni, en son centre, d'une ouverture (14), au moins partielle, qui peut par exemple être, ronde, carrée ou encore en forme d'étoile à plusieurs branches. L'épaisseur du fond (13) de la zone de dépression est plus importante sur son pourtour (15), comme cela est visible en particulier sur la figure 2, ce qui permet de limiter les déformations dudit fond (13) sous l'effet de la pression exercée pour distribuer le contenu du récipient (1). La zone de dépression est, de façon optionnelle, renforcée par la présence d'ailettes (16), par exemple au nombre de trois, contenues dans des plans passant par l'axe de symétrie du récipient. Lorsqu'elles sont présentes, les ailettes forment équerre entre la paroi (12) de la zone de dépression et une partie plane annulaire du fond (11) du récipient. La présence des ailettes (16) permet de faciliter l'insertion du dispositif de distribution dans un appareil de distribution standard. Le récipient comporte éventuellement, à son extrémité supérieure, une collerette (17) sur son pourtour, ainsi qu'une pluralité de nervures (18) de renforcement, sensiblement verticales, formées sur la paroi extérieure du corps (10) du récipient, qui permettent de renforcer le haut du récipient (1). Ces nervures (18) de renforcement permettent également d'empiler et de dépiler facilement plusieurs dispositifs de distribution avant et/ou après utilisation. Deux nervures circulaires (19) parallèles sont formées à proximité de l'extrémité supérieure du récipient (1), sur la paroi intérieure du corps (10) du récipient, dans des plans perpendiculaires à l'axe de symétrie de ce dernier, pour maintenir le recouvrement au-dessus du contenu du récipient.

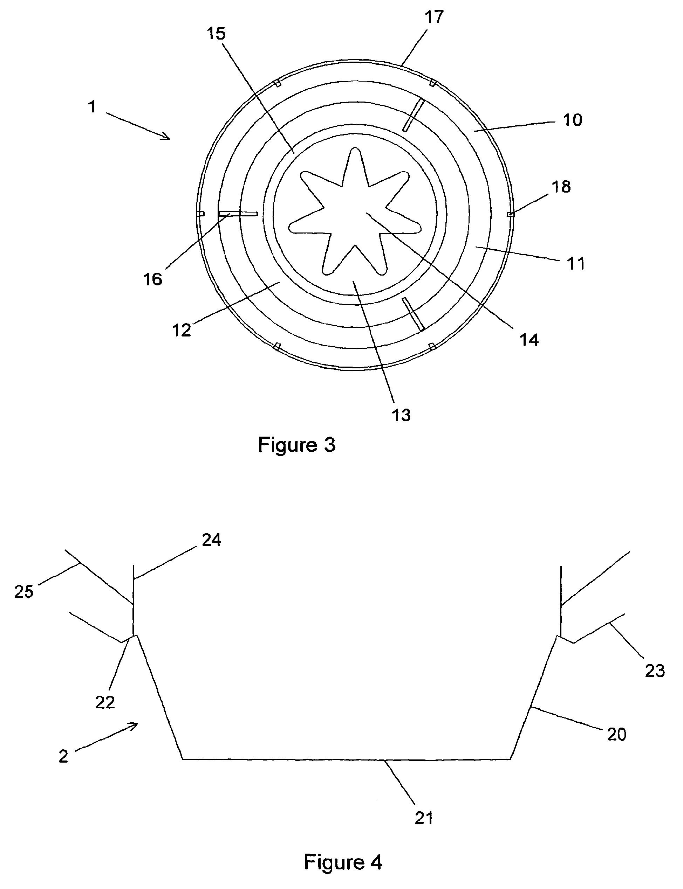

Le recouvrement (2), représenté en particulier sur la figure 4, comprend un corps (20) tronconique fermé par un fond (21). Le diamètre de la section dudit corps (20) diminue entre l'extrémité du recouvrement éloignée du fond et l'extrémité du recouvrement proche du fond, dites respectivement extrémité supérieure et extrémité inférieure du recouvrement. Une lèvre rigide (22), orientée vers l'extrémité inférieure du recouvrement (2), est formée à l'extrémité supérieure du corps (20) du recouvrement (2), tout autour de ce dernier. Une première lèvre flexible (23) est formée à l'extrémité libre de la lèvre rigide (22). Une paroi cylindrique (24) est formée sur la lèvre rigide (22), à proximité du corps (21) du recouvrement. Une deuxième lèvre flexible (25) est formée sur cette paroi (24). Les deux lèvres flexibles (23, 25) sont orientées vers le haut du recouvrement (2) et font tout le tour de ce dernier.

Le corps (20) et le fond (21) du recouvrement (2) sont de formes et de dimensions complémentaires à l'intérieur de la zone de dépression tronconique formée à l'intérieur du fond (11) du récipient (1). La lèvre rigide (22) est positionnée à une distance du fond (21) du recouvrement (2) qui correspond à la hauteur de la zone de dépression. Les dimensions de la lèvre rigide (22) sont proches de celles de la partie annulaire du fond (11) du récipient (1).

Les lèvres flexibles (23, 25) sont telles que, avant que le recouvrement (2) ne soit enfoncé dans le récipient (1), l'extrémité libre de chaque lèvre flexible (23, 25) repose sur une des arêtes (19) formées en haut du récipient (1), à l'intérieur du corps (10). Dans cette position, l'extrémité libre de chaque lèvre flexible (23, 25) est en contact avec la paroi intérieure du corps (10) du récipient.

Lorsqu'un utilisateur du dispositif de distribution selon l'invention exerce une pression sur le recouvrement, par exemple à l'aide d'une machine adaptée, le recouvrement (2) s'enfonce vers le fond du récipient (1), le contenu du récipient s'échappant par l'ouverture (14) réalisée dans le fond (13) de la zone de dépression formée dans le fond (11) du récipient. L'extrémité libre de chaque lèvre flexible (23, 25) reste en contact permanent avec la paroi intérieure du corps (10) du récipient. Ce corps se rétrécissant vers le bas du récipient, les lèvres flexibles (23, 25) se courbent de plus en plus vers le haut, en se déformant de façon irréversible, au fur et à mesure que le recouvrement (2) descend dans le récipient (1). La lèvre rigide (22) se déforme légèrement pour évacuer le contenu du récipient de la partie annulaire du fond (11) du récipient vers la paroi tronconique (12) de la zone de dépression.

Lorsque le contenu du récipient est entièrement vidé, le corps (20) et le fond (21) du recouvrement (2) reposent contre respectivement la paroi (12) et le fond (13) de la zone de dépression formée dans le fond (11) du récipient, et l'extrémité de la lèvre rigide (22) éloignée du corps (20) du recouvrement repose contre le fond (11) du récipient (1).

Le récipient (1) et le recouvrement (2) sont en matière plastique moulée, de préférence en polypropylène.

Le fait que le recouvrement soit rigide, avec des lèvres flexibles qui se déforment pour rester en contact permanent avec la paroi intérieure du récipient, permet de vider complètement le contenu du récipient. La présence de deux lèvres flexibles disposées l'une au-dessus de l'autre permet également d'assurer un meilleur raclage de la paroi intérieure du récipient. De même, la paroi tronconique (12) de la zone de dépression étant peu inclinée par rapport à la verticale, le vidage est plus aisé que pour le dispositif commercialisé par la société Miko.

Il doit être évident, pour les personnes versées dans l'art, que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif de distribution, constitué d'un récipient (1) et d'un recouvrement (2), le récipient (1) comprenant un corps (10), de forme légèrement tronconique, fermé par un fond (11), le diamètre de la section dudit corps (10) diminuant entre l'extrémité du récipient (1) éloignée du fond (11) et l'extrémité du récipient (1) proche du fond (11), dites respectivement extrémité supérieure et extrémité inférieure du récipient, une zone de dépression, munie d'une ouverture (14) au moins partielle permettant l'expulsion du contenu du récipient, étant réalisée à l'intérieur du fond (11) du récipient (1), l'extrémité inférieure du recouvrement (2) étant de forme et de dimensions complémentaires à l'intérieur de la zone de dépression du récipient (1), **caractérisé en ce que** le recouvrement (2) comporte au moins deux lèvres (23, 25) flexibles formées l'une au-dessus de l'autre et orientées vers l'extrémité supérieure du recouvrement, les lèvres flexibles se déformant au fur et à mesure de la descente du recouvrement vers le fond du récipient, de façon à ce qu'au moins l'extrémité libre des lèvres flexibles (23, 25) reste en contact permanent avec la paroi intérieure du corps (10) du récipient, pour permettre un vidage de la zone de dépression, assurant un vidage complet du contenu du récipient (1).

2. Dispositif de distribution selon la revendication 1, **caractérisé en ce que** la zone de dépression formée dans le fond (11) du récipient (1) est constituée d'une paroi tronconique (12) fermée par un fond (13) muni de l'ouverture (14).

3. Dispositif de distribution selon la revendication 1 ou 2, **caractérisé en ce que** le recouvrement (2), comprenant un corps (20) tronconique fermé par un fond (21), comporte une lèvre rigide (22) solidaire de l'extrémité éloignée du fond, dite extrémité supérieure, du corps (20) du recouvrement (2), tout autour de ce dernier, et orientée vers l'extrémité proche du fond, dite extrémité inférieure, du recouvrement (2), et **en ce qu'**une paroi (24) est formée sur la lèvre rigide (22), à proximité du corps (21) du recouvrement, les lèvres flexibles (23, 25) étant formées, respectivement, à l'extrémité de la lèvre rigide (22) éloignée du corps (20) du recouvrement (2), et sur la paroi (24).

4. Dispositif de distribution selon la revendication 2 ou 3, **caractérisé en ce que** l'épaisseur du fond (13) de la zone de dépression est plus importante sur son pourtour (15), ce qui permet de limiter les déformations dudit fond (13) sous l'effet de la pression exercée pour distribuer le contenu du récipient (1).

5. Dispositif de distribution selon une des revendications 2 à 4, **caractérisé en ce que** la paroi tronconique (12) constituant la zone de dépression est renforcée par la présence d'une pluralité d'ailettes (16) contenues dans des plans passant par l'axe de symétrie du récipient (1), chaque ailette (16) formant équerre entre la paroi (12) de la zone de dépression et une partie plane annulaire du fond (11) du récipient.

6. Dispositif de distribution selon une des revendications 2 à 5, **caractérisé en ce que** le récipient comporte, à son extrémité supérieure, une collerette (17) sur son pourtour, ainsi qu'une pluralité de nervures (18) de renforcement, sensiblement verticales, formées sur la paroi extérieure du corps (10) du récipient, qui permettent de renforcer le haut du récipient (1).

7. Dispositif de distribution selon une des revendications 2 à 6, **caractérisé en ce que** deux nervures circulaires (19) parallèles sont formées à proximité de l'extrémité supérieure du récipient (1), sur la paroi intérieure du corps (10) du récipient, dans des plans perpendiculaires à l'axe de ce dernier, pour servir de repère au positionnement des lèvres flexibles (23, 25) et maintenir le recouvrement (2) au-dessus du contenu du récipient (1).

8. Dispositif de distribution selon une des revendications 3 à 7, **caractérisé en ce que** la lèvre rigide (22) est positionnée à une distance du fond (21) du recouvrement (2) correspondant à la hauteur de la zone de dépression, a des dimensions proches de celles d'une partie annulaire plane du fond (11) du récipient (1), et se déforme légèrement pour évacuer le contenu de ladite partie annulaire du fond (11) du récipient vers la paroi tronconique (12) de la zone de dépression.

## Claims

1. Dispensing device consisting of a container (1) and a cover (2), the container (1) comprising a slightly frustoconical body (10) which is closed by a base (11), the diameter of the cross-section of said body (10) decreasing between the end of the container (1) remote from the base (11) and the end of the container (1) close to the base (11), referred to as the upper end and lower end respectively of the container, a recessed region which is provided with an at least partial opening (14) allowing the contents of the container to be expelled, being formed in the interior of the base (11) of the container (1), the lower end of the cover (2) being shaped and sized so as to be complementary to the interior of the recessed zone of the container (1), **characterised in that** the cover (2) comprises at least two flexible lips (23, 25) which are formed one below the other and point towards the upper end of the cover, the flexible lips deforming as the cover descends towards the base of the container in such a way that at least the free end of the flexible lips (23, 25) is permanently in contact with the inner wall of the body (10) of the container in order to allow the recessed zone to be emptied, ensuring that the container (1) is completely emptied of its contents.

2. Dispensing device according to claim 1, **characterised in that** the recessed zone formed in the base (11) of the container (1) is composed of a frustoconical wall (12) which is closed by a base (13) which is provided with the opening (14).

3. Dispensing device according to either claim 1 or claim 2, **characterised in that** the cover (2), comprising a frustoconical body (20) which is closed by a base (21), has a rigid lip (22) which is integral with the end remote from the base, referred to as the upper end, of the body (20) of the cover (2), around the body (20), and points towards the end close to the base, referred to as the lower end, of the cover (2), and **in that** a wall (24) is formed on the rigid lip (22) in the vicinity of the cover body (21), the flexible lips (23, 25) being formed at the end of the rigid lip (22) remote from the body (20) of the cover (2), and on the wall (24) respectively.

4. Dispensing device according to either claim 2 or claim 3, **characterised in that** the base (13) of the recessed region is thicker at the periphery (15) thereof, which allows the deformation of said base (13) to be limited when pressure is exerted to dispense the contents of the container (1).

5. Dispensing device according to any one of claims 2 to 4, **characterised in that** the frustoconical wall (12) forming the recessed region is reinforced by the presence of a plurality of fins (16) which are arranged in planes which pass through the axis of symmetry of the container (1), each fin (16) forming a right angle between the wall (12) of the recessed zone and a planar annular part of the base (11) of the container.

6. Dispensing device according to any one of claims 2 to 5, **characterised in that** the upper end of the container comprises a collar (17) over the circumference thereof, and a plurality of reinforcing ribs (18) which are substantially vertical and formed on the outer wall of the body (10) of the container, allowing the top of the container (1) to be reinforced.

7. Dispensing device according to any one of claims 2 to 6, **characterised in that** two parallel circular ribs (19) are formed in the vicinity of the upper end of the container (1) on the inner wall of the body (10) of the container, in planes perpendicular to the axis of said body of the container in order to mark the position of the flexible lips (23, 25) and to hold the cover (2) above the contents of the container (1).

8. Dispensing device according to any one of claims 3 to 7, **characterised in that** the rigid lip (22) is positioned at a distance from the base (21) of the cover (2) corresponding to the height of the recessed zone and has dimensions similar to those of a planar annular part of the base (11) of the container (1) and deforms slightly to empty the contents of said annular part of the base (11) of the container towards the frustoconical wall (12) of the recessed zone.

## Patentansprüche

1. Ausgabevorrichtung, die aus einem Behälter (1) und einem Deckel (2) gebildet ist, wobei der Behälter einen Körper (10) mit einer leicht kegelförmigen Form aufweist, der durch einen Boden (11) geschlossen ist, wobei sich der Durchmesser des Querschnitts des Körpers (10) zwischen dem von dem Boden (11) entfernten Ende des Behälters (1) und dem Ende des Behälters (1), das nahe bei dem Boden (11) ist, die jeweils als oberes Ende und unteres Ende des Behälters bezeichnet werden, verringert, wobei ein Vertiefungsbereich, der mit einer zumindest partiellen Öffnung (14) versehen ist, die das Ausstoßen des Inhalts des Behälters ermöglicht, im Inneren des Bodens (11) des Behälters (1) realisiert ist, wobei das untere Ende des Deckels (2) eine Form und Abmessungen aufweist, die zu dem Inneren des Vertiefungsbereichs des Behälters (1) komplementär sind, **dadurch gekennzeichnet, dass** der Deckel (2) mindestens zwei flexible Lippen (23, 25) aufweist, die übereinander ausgebildet sind und in Richtung zu dem oberen Ende des Deckels gerichtet sind, wobei sich die flexiblen Lippen nach und nach beim Absenken des Deckels in Richtung zu dem Boden des Behälters verformen, so dass zumindest das freie Ende der flexiblen Lippen (23, 25) in dauerhaftem Kontakt mit der Innenwand des Körpers (10) des Behälters bleibt, um ein Leeren des Vertiefungsbereiches zu ermöglichen, wobei ein vollständiges Entleeren des Inhalts des Behälters sichergestellt wird.

2. Ausgabevorrichtung gemäß Anspruch 1, **dadurch gekennzeichnet, dass** der in dem Boden (11) des Behälters (1) ausgebildete Vertiefungsbereich aus einer kegelförmigen Wand (12) gebildet ist, die durch einen Boden (13) geschlossen ist, der die Öffnung (14) aufweist.

3. Ausgabevorrichtung gemäß Anspruch 1 oder 2, **dadurch gekennzeichnet, dass** der Deckel (2), der einen durch einen Boden (21) geschlossenen kegelförmigen Körper (20) aufweist, eine steife Lippe (22) aufweist, die einstückig mit dem von dem Boden entfernten Ende des Körpers (20) des Deckels (2), das als oberes Ende bezeichnet wird, vollständig um diesen herum ausgebildet ist, und in Richtung zu dem Ende des Deckels (2) gerichtet ist, das nahe bei dem Boden ist, das als unteres Ende bezeichnet wird, und dass eine Wand (24) an der steifen Lippe (22) in der Nähe des Körpers (21) des Deckels ausgebildet ist, wobei die flexiblen Lippen (23, 25) jeweils an dem Ende der steifen Lippe (22), das von dem Körper (20) des Deckels (2) entfernt ist, und an der Wand (24) ausgebildet sind.

4. Ausgabevorrichtung gemäß Anspruch 2 oder 3, **dadurch gekennzeichnet, dass** die Dicke des Bodens (13) des Vertiefungsbereichs an seinem Umfang (15) stärker ist, wodurch ermöglicht wird, Verformungen des Bodens (13) unter der Einwirkung des Drucks, der zum Ausgeben des Inhalts des Behälters (1) ausgeübt wird, einzuschränken.

5. Ausgabevorrichtung gemäß einem der Ansprüche 2 bis 4, **dadurch gekennzeichnet, dass** die kegelförmige Wand (12), die den Vertiefungsbereich bildet, durch die Anwesenheit einer Mehrzahl von Flügelchen (16) verstärkt ist, die in Ebenen enthalten sind, die durch die Symmetrieachse des Behälters (1) verlaufen, wobei jedes Flügelchen (16) zwischen der Wand (12) des Vertiefungsbereichs und einem ebenen ringförmigen Teil des Bodens (11) des Behälters einen Anlegewinkel bildet.

6. Ausgabevorrichtung gemäß einem der Ansprüche 2 bis 5, **dadurch gekennzeichnet, dass** der Behälter an seinem oberen Ende aufweist: einen Kragen (17) an seinem Umfang und eine Mehrzahl von Verstärkungsrippen (18), die im Wesentlichen vertikal sind, die an der Außenwand des Körpers (10) des Behälters ausgebildet sind, die ein Verstärken des oberen Teils des Behälters (1) ermöglichen.

7. Ausgabevorrichtung gemäß einem der Ansprüche 2 bis 6, **dadurch gekennzeichnet, dass** zwei kreisförmige parallele Rippen (19) in der Nähe des oberen Endes des Behälters (1) an der Innenwand des Körpers (10) des Behälters, in Ebenen, die senkrecht zu der Achse desselben sind, ausgebildet sind, um als Bezugspunkt bei der Positionierung der flexiblen Lippen (23, 25) zu dienen, und um den Deckel (2) über dem Inhalt des Behälters (1) zu halten.

8. Ausgabevorrichtung gemäß einem der Ansprüche 3 bis 7, **dadurch gekennzeichnet, dass** die steife Lippe (22) in einer Entfernung von dem Boden (21) des Deckels (2) positioniert ist, die der Höhe des Vertiefungsbereichs entspricht, Abmessungen aufweist, die denen eines ebenen ringförmigen Teils des Bodens (11) des Behälters (1) ähneln, und sich leicht verformt, um den Inhalt von dem ringförmigen Teil des Bodens (11) des Behälters in Richtung zu der kegelförmigen Wand (12) des Vertiefungsbereichs zu entleeren.
